# EUROPÄISCHE PATENTSCHRIFT

(11) **EP 3 059 009 B1**
(45) Veröffentlichungstag und Bekanntmachung des Hinweises auf die Patenterteilung: **04.05.2022**
(21) Anmeldenummer: 15155764.2
(22) Anmeldetag: 19.02.2015
(51) Int. Cl.: B01J 2/26, A61K 9/20, B65D 81/00, C07C 35/12

(54) **VERFAHREN ZUR LAGERUNG VON KÜHLSTOFFEN**
Process for the storage of refreshing agents
Procédé pour le stockage d'agents rafraîchissants

(43) Veröffentlichungstag der Anmeldung: 24.08.2016
(60) Teilanmeldung: 22156265.5
(73) Patentinhaber: Symrise AG, 37603 Holzminden (DE)
(72) Erfinder: Lenz, Oliver, 37170 Uslar (DE); Michler, Michael, 37632 Eimen (DE); Niekerken, Jörg, 37603 Holzminden (DE); Siewert, Jürgen, 37434 Rollshausen (DE); Wolter, Christian, 31868 Ottenstein (DE)
(74) Vertreter: Fabry, Bernd

(56) Entgegenhaltungen:
- WO-A1-2008/152009
- US-A- 3 023 253
- US-A- 3 064 311

## Beschreibung

### GEBIET DER ERFINDUNG

Die Erfindung befindet sich auf dem Gebiet der Kühlstoffe für kosmetische oder auch pharmazeutische Anwendungen und betrifft ein Verfahren, wie sich diese lagern, befüllen und transportieren lassen, ohne dass es zu Verbackungen kommt.

### TECHNOLOGISCHER HINTERGRUND

Menthol, als Basissubstanz für kosmetische oder pharmazeutische feste Kühlstoffe, ist ein natürlich vorkommender Wirkstoff, der beim Kontakt mit Schleimhäuten, speziell der Mundschleimhaut, einen kühlenden Effekt bewirkt. Menthol - und zahlreiche in der Folge entwickelte Mentholverbindungen mit teilweise deutlich gesteigerter Kühlwirkung - finden daher in Pharmazie, Kosmetik und Lebensmittelindustrie breite Anwendung. In natürlichen Quellen, beispielsweise dem Pfefferminzöl, kommt Menthol in Form von vier diastereomeren Enantiomerenpaaren vor, von denen nur die Hauptkomponente, das (-)-Menthol oder L-Menthol die gewünschten geschmacklichen und sonstigen sensorischen Eigenschaften hat, wie bereits **in** J. Am. Chem. Soc, Vol. 39 (8), 1917, S. 1515 bis 1525 beschrieben. So liegen insbesondere die Schmelzpunkte dieser verschiedenen Modifikationen zwischen 33 bis 43 °C wie in Archiv der Pharmazie, 307 (7), 1974, S. 497 bis 503 beschrieben. Der Schmelzpunkt der stabilen α- Modifikation liegt demgemäß bei 42 bis 43 °C.

Wegen dieser Lage der Schmelzpunkte kann L-Menthol sowie die meisten Mentholverbindungen an den Endverbraucher sowohl als in beheizten Behältern flüssig gehaltene Schmelze als auch in Form von Kristallen oder anderen erstarrten Formkörpern, wie Kompaktaten, Pastillen, Schuppen und dergleichen abgegeben werden. Generell weisen alle Feststoffe, die, wie L-Menthol und die dem Menthol strukturell verwandten Stoffe, einen Schmelzpunkt nur knapp oberhalb der Umgebungstemperatur haben, eine starke Neigung auf zu verbacken und zu verklumpen. Die Verarbeitung solchen nicht spezifikationsgerechten Materials ist aber mit erheblichem Zusatzaufwand verbunden. Soll nun reines L-Menthol bzw. Mentholverbindungen, d.h. nicht mit Hilfsmitteln wie z.B. Trennmitteln behandeltes Material als Feststoff verkauft werden, muss entweder durch eine geschlossene Kühlkette oder durch die Art der Formgebung sichergestellt werden, dass das Produkt den Endverbraucher in rieselfähiger Form erreicht.

Kommerziell ist beispielsweise Menthol in Form großer Kristalle verfügbar, die bei einer Länge von 0,5 bis 3 cm eine Dicke von 1 bis 3 mm aufweisen. Sie werden traditionell in kleinen Mengen aus natürlich gewonnenem Pfefferminzöl gezüchtet, in dem das Öl in Trögen oder Wannen über viele Tage in Kühlhäusern zur Kristallisation gebracht wird. Diese Kristalle weisen nur bei geringer Schütthöhe eine gute Rieselfähigkeit auf, verbacken aber zusehends bei erhöhter Last und/oder erhöhter Temperatur. Der technische Aufwand für die Kristallisation, Abtrennung und Reinigung der Kristalle und die geringe Raum- ZeitAusbeute eines solchen langwierigen Verfahrens machen es für die großtechnische Anwendung unattraktiv.

### RELEVANTER STAND DER TECHNIK

Die DE 2530481 betrifft eine Vorrichtung zum Kristallisieren von Substanzen, insbesondere von optisch aktiven Mentholverbindungen, die unter Kristallisationsbedingungen grobe nadel- und balkenförmige Kristalle bilden. Das diskontinuierlich durchzuführende Kristallisationsverfahren wird unter Einsatz eines besonderen Rührwerkes durchgeführt, das ein Zusammenbacken der Kristalle in der Kristallsuspension verhindert. Das Wertprodukt wird abschließend durch eine Zentrifuge isoliert und in einem Trockner getrocknet.

Die beiden Patentschriften US 3,023,253 und US 3,064,311 beschreiben geschupptes L-Menthol sowie ein Verfahren zur Herstellung derartiger Schuppen durch Aufbringen einer Schmelze von L-Menthol auf einer gekühlten Tauchwalze. Falls gewünscht kann die Mentholschmelze zwischen ein Paar gegenläufig rotierender, gekühlter Walzen eingebracht werden. Der auf der Tauchwalze ankristallisierte Mentholfilm wird nachbehandelt, indem er durch Wärmeeintrag getempert und durch Aufbringen zusätzlichen Menthols verstärkt wird. Beide Nachbehandlungen werden simultan mit einer Auftragswalze erreicht. Die so erhaltenen Schuppen weisen zunächst eine gute Rieselfähigkeit auf. Nach längerer Lagerung tritt jedoch eine leichte Verbackung ein, die eine mechanische Auflockerung durch Rütteln des Containers erforderlich macht. Es wird bemerkt, dass diese Verbackung durch eine zwar erwähnte, aber nicht näher charakterisierte poröse Oberfläche und damit einhergehende starke Sublimation des Produkts verursacht wird und dass das so erhaltene Produkt durch Kompaktieren zu Pellets weiterverarbeitet werden kann.

Das Prinzip der weiteren Vergröberung der Primärpartikel durch Kompaktierung wird auch in der DE 10224087 betreffend kompaktiertes Menthol in Form von Menthol- Presslingen sowie ein Verfahren zur Herstellung derselben beschrieben. Hier wird aber nicht auf die Wirkung der Partikelgröße allein abgehoben, sondern darauf, dass die Primärpartikel in einer spezifischen Kristallmodifikation vorliegen müssen. Durch Verpressen von Kristallen, die aus einer Lösungskristallisation oder einer Kühlwalzenverschuppung gewonnen wurden, lassen sich gegen Verbackung stabile Kompaktate erhalten, wenn diese überwiegend aus der thermodynamisch stabilen, erst bei 42,5 °C schmelzenden α-Modifikation bestehen.

Gegenstand der internationalen Patentanmeldung WO 2008 152009 A1 (BASF) ist ein Verfahren zur Herstellung von L-Menthol in fester Form durch Inkontaktbringen einer L-Menthol-Schmelze mit zwei voneinander beabstandeten gekühlten Oberflächen unter Erstarrung der L-Menthol-Schmelze zu L-Menthol in fester Form, wobei man den Kontakt zwischen der erstarrenden L-Menthol-Schmelze und den gekühlten Oberflächen mindestens bis zum Abschluss der Erstarrung aufrecht erhält. Bei diesem Verfahren wird die Kristallisation des Menthols durch eine Kombination aus einem Vorkristallisierer und einem Doppelbandkühler bewirkt. Hierbei wird die Mentholsuspension in den Spalt zwischen zwei gekühlten Flächen gegeben und zum Erstarren bzw. Kristallisieren gebracht.

### AUFGABE DER ERFINDUNG

Ein besonderes Problem bei der Verpackung, Lagerung und dem Transport von festen Kühlstoffen der beschriebenen Art im Allgemeinen, und Menthol im Besonderen, ist der hohe Feinanteil, der Anlass gibt, dass die Kompaktate verbacken, sowie die hohe Sublimationsneigung dieser Stoffe. Dies führt dazu, dass die Feststoffe oftmals in Plastikbeutel abgepackt und die Packungen dann anschließend bewusst grob behandelt werden, um Verbackungen mechanisch wieder aufzubrechen.

Besonders nachteilig ist, dass die Produkte infolge ihrer Sublimationstendenz unter Umständen sogar als Gefahrgut eingestuft werden und dann nicht mehr beliebig verpackt werden dürfen. Tatsächlich kommen in solchen Fällen dann nur noch bestimmte Kartonagen in Betracht, die eine Zulassung für den Transport von Gefahrgütern besitzen. Es ist nachzuvollziehen, dass dies zu einer weiteren Verteuerung der Produkte führt, die es zu verhindern gilt.

Die Aufgabe der vorliegenden Erfindung hat folglich darin bestanden, einen Weg aufzuzeigen, der es erlaubt, feste Kühlstoffe, speziell feste Mentholverbindungen und insbesondere Menthol bzw. Menthol-Racemate so zur Verfügung zu stellen, dass sie in konventionellen Verpackungen gelagert und transportiert werden können, ohne dass es zu den beschriebenen Verbackungen kommt.

### BESCHREIBUNG DER ERFINDUNG

Die Erfindung betrifft ein Verfahren zur verbackungsfreien Lagerung von festen Mentholverbindungen in Form von Schuppen oder Pastillen, welches sich dadurch auszeichnet, dass man diese bei Umgebungstemperatur in Normverpackungen mit einem Fassungsvermögen von maximal 25 I mit den Maßgaben abfüllt, dass
(a) die Verpackungen bis maximal zu 50 Vol.-% gefüllt sind und
(b) die Füllmenge ein Gewicht von 10 kg nicht übersteigt.

Überraschenderweise wurde gefunden, dass sich feste Kühlstoffe vom Typ der Mentholverbindungen und besonders bevorzugt Menthol und seine Racemate problemlos in beliebigen Normverpackungen, insbesondere Normkartons abfüllen, lagern und transportieren lassen, wenn man hierzu bestimmte Verpackungsvorschrift beachtet, nämlich die Verpackungen nicht mehr als zur Hälfte, konkret bis zur Hälfte der Höhe der Verpackungen befüllt, wobei die Füllmenge in Summe ein Gewicht von etwa 10 kg und insbesondere etwa 5 kg nicht übersteigen sollte. Auf diese einfache, aber effektive Weise, lassen sich auch gerade Menthol-Racemate problemlos über einen Zeitraum von mindestens 6 Wochen bei Umgebungstemperatur lagern, ohne dass eine mechanische Nachbehandlung erforderlich wird. Tatsächlich kann sogar das bislang übliche Verpacken in Kunststoffbeutel unterbleiben, d.h. sogar Menthol kann direkt in die Normverpackung abgefüllt werden, was bis dato als nicht möglich galt.

### MENTHOLVERBINDUNGEN

Mentholverbindungen umfassen - neben dem Grundkörper Menthol selber - Stoffe, die ausgewählt aus der Gruppe, die gebildet wird von Menthol Methyl Ether, Menthone Glyceryl Acetal (FEMA GRAS¹ 3807), Menthone Glyceryl Ketal (FEMA GRAS 3808), Menthyl Lactate (FEMA GRAS 3748), Menthol Ethylene Glycol Carbonate (FEMA GRAS 3805), Menthol Propylene Glycol Carbonate (FEMA GRAS 3806), Menthyl-N-ethyloxamat, Monomethyl Succinate (FEMA GRAS 3810), Monomenthyl Glutamate (FEMA GRAS 4006), Menthoxy-1,2-propanediol (FEMA GRAS 3784), Menthoxy-2-methyl-1,2-propandiol (FEMA GRAS 3849) sowie den Menthancarbonsäureestern und -amiden WS-3, WS-4, WS-5, WS-12, WS-14 und WS-30 sowie deren Gemischen.

Ein erster wichtiger Vertreter der Stoffe, die die Komponente (b) bilden, stellt das Monomenthyl Succinate (FEMA GRAS 3810) dar, das als Stoff bereits 1963 von Brown & Williamson Tobacco Corp. patentiert worden (US 3,111,127) und als Kühlmittel Gegenstand der Schutzrechte US 5,725,865 und 5,843,466 (V.Mane Fils) ist. Sowohl das Succinat als auch das analoge Monomenthyl Glutarate (FEMA GRAS 4006) stellen wichtige Vertreter von Monomenthylestern auf Basis von Di- und Polycarbonsäuren dar:

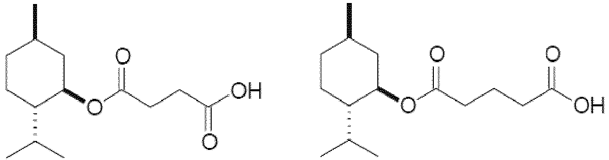

Beispiele für Anwendungen dieser Stoffe finden sich beispielsweise in den Druckschriften WO 2003 043431 (Unilever) oder EP 1332772 A1 (IFF).

Die nächste wichtige Gruppe von im Sinne der Erfindung bevorzugten Mentholverbindungen umfasst Carbonatester von Menthol und Polyolen, wie beispielsweise Glykolen, Glycerin oder Kohlenhydraten, wie beispielsweise Menthol Ethylenglycol Carbonate (FEMA GRAS 3805 = Frescolat^{®} MGC), Menthol Propylenglycol Carbonate (FEMA GRAS 3784 = Frescolat^{®} MPC), Menthol 2-Methyl-1,2-propandiol Carbonate (FEMA GRAS 3849) oder den entsprechenden Zuckerderivaten:

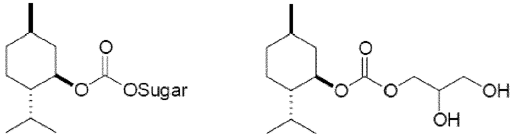

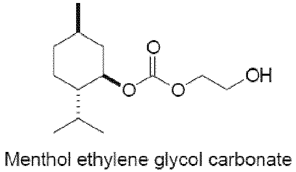

Die Verwendung derartiger Stoffe als Kühlstoff für Zigaretten ist beispielsweise Gegenstand der Druckschrift US 3,419,543 (Mold et al.) aus dem Jahre 1968; die Anwendung als physiologisches Kühlmittel wird in DE 4226043 A1 (H&R) beansprucht.

Im Sinne der Erfindung bevorzugt sind die Mentholverbindungen Menthyl Lactate (FEMA GRAS 3748 = Frescolat^{®} ML) und insbesondere das Menthone Glyceryl Acetal (FEMA GRAS 3807) bzw. Menthone Glyceryl Ketal (FEMA GRAS 3808), das unter der Bezeichnung Frescolat^{®} MGA vermarktet wird.

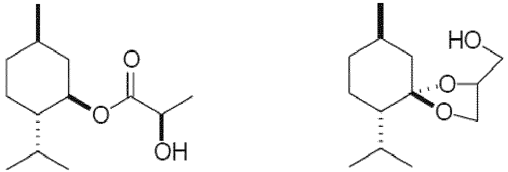

Erstere Struktur wird durch Veresterung von Milchsäure mit Menthol, letztere durch Acetalisierung von Menthon mit Glycerin gewonnen (vgl. DE 2608226 A1, H&R). In diese Gruppe von Verbindungen gehört auch das 3-(I-Menthoxy)-1,2,propandiol, das auch als Cooling Agent 10 bekannt ist (FEMA GRAS 3784, vgl. US 6,328,982, TIC), sowie das 3-(I-Menthoxy)-2-methyl-1,2,propandiol (FEMA GRAS 3849), das über eine zusätzliche Methylgruppe verfügt.

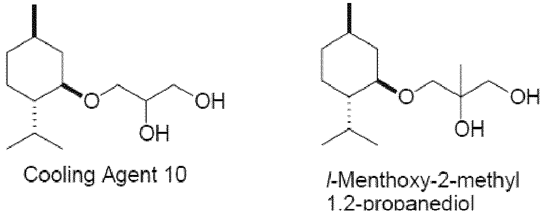

Die Herstellung des 3-(I-Menthoxy)-1,2,propandiol erfolgt beispielsweise ausgehend von Menthol nach dem folgenden Schema (vgl. US 4,459,425, Takagaso):

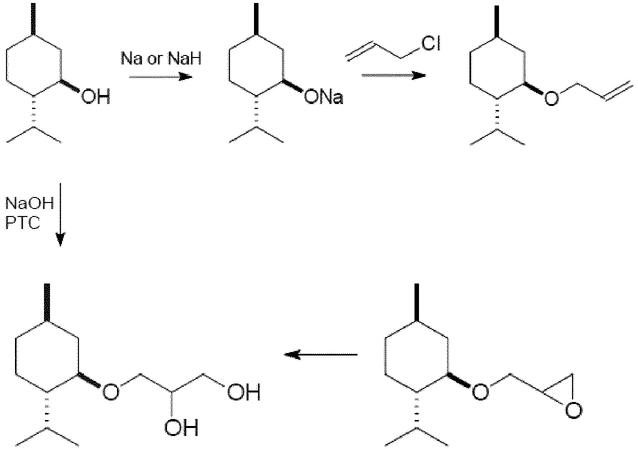

Alternative Routen, bei denen in der ersten Stufe Menthol mit Epichlorhydrin umgesetzt wird, wird in US 6,407,293 und US 6,515,188 (Takagaso) beschrieben. Im Folgenden wird eine Übersicht der bevorzugten Mentholverbindungen gegeben, die sich durch eine CO-Bindung auszeichnen:

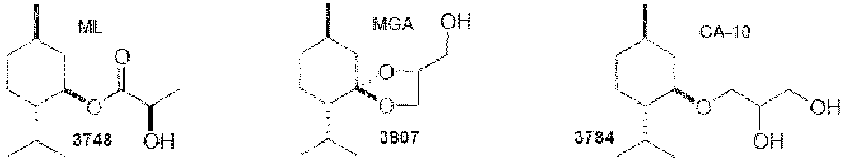

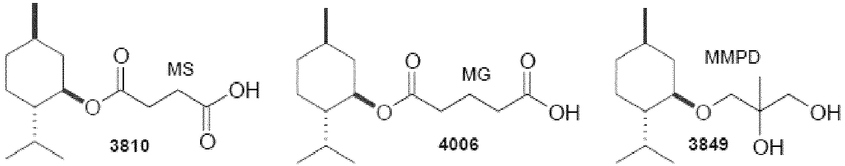

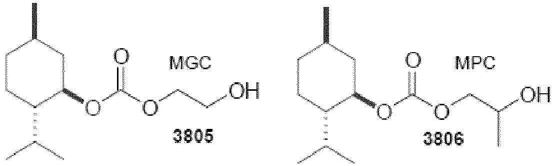

Als ganz besonders vorteilhaft haben sich unter diesen Stoffen Menthone Glyceryl Acetal/Ketal sowie das Menthyl Lactate sowie Menthol Ethylene Glycol Carbonate bzw. Menthol Propylene Glycol Carbonatw erwiesen, die die Anmelderin unter den Bezeichnungen Frescolat^{®} MGA, Frescolat^{®} ML, Frecolat^{®} MGC und Frescolat^{®} MPC vertreibt.

In den 70er Jahren des vergangenen Jahrhunderts wurden erstmals Mentholverbindungen entwickelt, die in der 3-Stellung über eine C-C-Bindung verfügen und von denen ebenfalls eine Reihe von Vertretern im Sinne der Erfindung eingesetzt werden können. Diese Stoffe werden im Allgemeinen als WS-Typen bezeichnet. Grundkörper ist ein Mentholderivat, bei dem die Hydroxyl- gegen eine Carboxylgruppe ersetzt ist (WS-1). Von dieser Struktur leiten sich alle weiteren WS-Typen ab, wie beispielsweise die ebenfalls im Sinne der Erfindung bevorzugten Spezies WS-3, WS-4, WS-5, WS-12, WS-14 und WS-30. Die beiden nachfolgenden Schaubilder zeigen die Synthesewege auf:

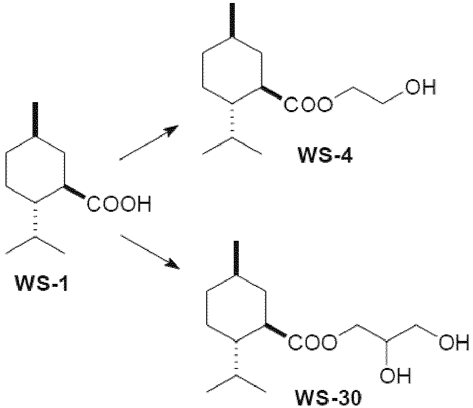

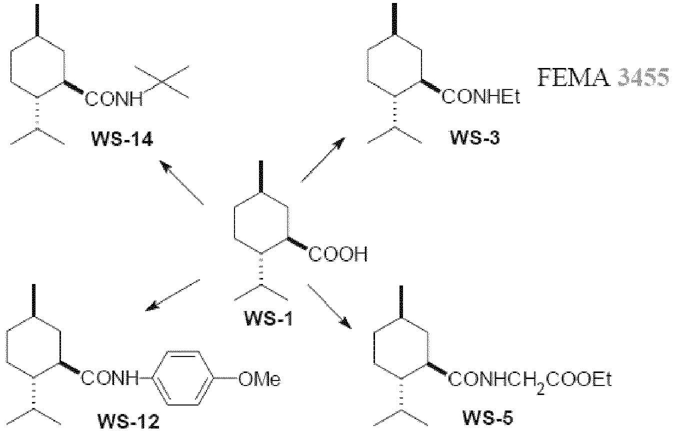

Die sich von WS-1 ableitenden Ester werden beispielsweise in US 4,157,384, die entsprechenden N-substituierten Amide in J. Soc. Cosmet. Chem. S. 185-200 (1978) beschrieben.

Eine Reihe der oben beschriebenen Kühlstoffe sind bei Raumtemperatur nicht fest, sondern flüssig. Diese Stoffe können jedoch wie dem Fachmann sofort klar ist, anspruchsgemäß mit anderen bei Raumtemperatur festen Kühlstoffen abgemischt werden, wobei diese Mischungen selbst wieder fest sind.

### BEVORZUGTE MENTHOLVERBINDUNGEN

Als Mentholverbindungen, die es erfindungsgemäß zu lagern gilt, sind insbesondere erstarrte Schmelzen von L-Menthol zu verstehen, wobei das geschmolzene Menthol natürlichen oder synthetischen Ursprungs sein kann und einen Enantiomerenüberschuß von üblicherweise mindestens 95, 96 oder 97 bis 100 %, bevorzugt 98, 98,5 oder 99 bis 99,9 % aufweist. Insbesondere eignen sich als Ausgangsstoffe im Rahmen des erfindungsgemäßen Verfahrens auch solche Schmelzen von L-Menthol, die einen Gehalt an L-Menthol von mindestens 95, 96 oder 97 Gew.-% oder darüber, bevorzugt mindestens 98 bis 100 Gew.-% und ganz besonders bevorzugt 98, 98,5 oder 99 bis 99,9 Gew.-% aufweisen (jeweils bezogen auf das Gesamtgewicht der Schmelze), neben Verunreinigungen wie beispielsweise Resten von Lösemitteln, Diastereomeren des L-Menthols oder Nebenprodukten aus Synthese- bzw. Isolierverfahren.

Dabei ist unter dem Begriff L-Menthol-Schmelze vorzugsweise solches L-Menthol zu verstehen, das weitgehend, d.h. zu mindestens 80 oder besser 85 Gew.-%, bevorzugt zu mindestens 90 oder 95 Gew.-% und ganz besonders bevorzugt zu mindestens 95, 96, 97, 98 oder 99 Gew.-% in geschmolzener Form vorliegt, wobei die restlichen Gewichtanteile die Menge an festem L-Menthol in der Schmelze ausmachen. Dabei kann es sich bei dem gegebenenfalls enthaltenen Anteil an festem Menthol in der Schmelze um solches handeln, das durch einen noch nicht vollständig abgeschlossenen Schmelzprozess des zur Bereitstellung der Schmelze eingesetzten Material noch in der Schmelze vorliegt oder dem vollständig bzw. teilweise geschmolzenen Menthol in fester Form zugesetzt wird, beispielsweise in Form von Kristallen von L-Menthol in der α-Modifikation. Solche auch als Impfkristalle zu bezeichnenden Kristalle von L- Menthol in der α-Modifikation können beispielsweise auf herkömmliche Weise durch Kristallisation von L-Menthol aus einer L-Menthol-haltigen Lösung oder Schmelze gewonnen werden.

Wie eingangs schon erläutert, ergibt sich das Problem des Verbackens speziell bei Mentholverbindungen und insbesondere bei Menthol. Die Anmelderin hat bei den durchgeführten Untersuchungen gefunden, dass es weitere physikalische Parameter gibt, die das Verbackungsverhalten positiv oder negativ beeinflussen können.

Feste Kühlstoffe im Allgemeinen, Mentholverbindungen und speziell Menthol im Besonderen, die eine schon grundsätzlich verringerte Neigung zum verbacken aufweisen, zeichnen sich dadurch aus, dass sie nur noch geringe Feinanteile enthalten, ein günstiges Oberflächen/Volumenverhältnis aufweisen und gleichzeitig gewölbte aber glatte Oberflächen besitzen, die in der Schüttung möglichst kleine Kontaktflächen ergeben, unempfindlich gegen Abrieb sind und zudem möglichst wenig oder keine Bruchkannten aufweisen.

Die Erfindung betrifft daher feste Kühlstoffe, allen voran L-Mentholpartikel bzw. Menthol-Racematpartikel in Schuppen- oder Pastillenform mit einer gewölbten und einer flachen Seite, die einen Durchmesser von etwa 1 bis etwa 20 mm, bevorzugt 5 bis 12 mm aufweisen können und sich des Weiteren bevorzugt dadurch auszeichnen, dass sie
(i) einen Feinanteil (d.h. einen Anteil von Partikeln mit einem mittleren Durchmesser kleiner 1,6 mm) von weniger als 5 Gew.-%, vorzugsweise weniger als 2 Gew.-% und insbesondere weniger als 1 Gew.-%, ganz bevorzugt weniger als 0,5 Gew.-%, besonders bevorzugt weniger als 0,1 Gew.-% aufweisen, und/oder
(ii) einen alpha-Mentholgehalt von mindestens 80 Gew.-%, vorzugsweise etwa 85 bis etwa 99 Gew.-% und insbesondere etwa 90 bis etwa 95 Gew.-% besitzen; und/oder
(iii) ein Oberflächen-zu-Volumenverhältnis von kleiner als 2 mm⁻¹, Z vorzugsweise kleiner als 1,5 mm⁻¹ und besonders bevorzugt kleiner als 1,0 mm⁻¹ aufweisen und/oder
(iv) gewölbte Oberflächen aufweisen, so dass das Verhältnis von planer Oberfläche zur Gesamtoberfläche des Partikels maximal 60 %, vorzugsweise weniger als 50 % und bevorzugt weniger als 40 % beträgt.

Im Rahmen einer weiteren bevorzugten Ausführungsform setzt man solche Kristalle von L-Menthol in der α-Modifikation ein, die durch Behandlung von L-Menthol Schmelzen in einem Kratzkühler gewonnen werden, wobei die Impfkristalle in situ in der zu verfestigenden L-Menthol Schmelze gebildet werden und ein zusätzlicher Arbeitsschritt vermieden wird.

Weiter bevorzugt sind solche Partikel, die erhalten werden, indem man eine vorgekrätzte Schmelze einer Mentholverbindung gleichmäßig auf eine gekühlte Fläche vertropft. Die Vertropfung erfolgt vorzugsweise durch einen so genannten Rotoformer, bei der gekühlten Fläche handelt es sich vorzugsweise um ein gekühltes (Stahl-)band.

Um eine möglichste vollständige Erstarrung der Schmelzen, vorzugsweise des L-Menthols in der α-Modifikation zu gewährleisten, kann die Schmelze vor dem Einbringen in den Rotoformer und der Aufgabe auf das Kühlband wie vorstehend beschrieben mit Impfkristallen versetzt werden. Dies kann beispielsweise durch Einrühren in ein Vorlagegefäß oder Aufstreuen von zuvor zerkleinerten Kristallen beispielsweise der α-Modifikation des L-Menthols auf eine eingesetzte L-Menthol-Schmelze (den flüssigen Kristallfilm) erreicht werden. Alternativ ist es möglich, das Kühlband mit α-Mentholkristallen zu bestreuen. In einer bevorzugten Ausführungsform der Erfindung wird die Impfung durch Passage der Schmelze durch einen unterhalb des Schmelzpunktes betriebenen Wärmetauscher erreicht, dessen Wände durch ein Abriebsorgan von aufkristallisiertem Material befreit werden. Dem Fachmann sind solche Anordnungen beispielsweise als so genannte "Kratzkühler" geläufig und werden beispielsweise in G. Arkenbout: "Melt Crystallization Technology", Technomic Publishing Co. 1995, p 230 beschrieben. Dementsprechend zeichnet sich eine bevorzugte Ausführungsform des erfindungsgemäßen Verfahrens dadurch aus, dass die Impfkristalle durch Behandlung der einzusetzenden Schmelzen in einem Kratzkühler gebildet werden.

Es kann eine vorgekrätzte Schmelze von Mentholverbindungen eingesetzt werden, die eine Temperatur im Bereich von etwa 40 bis etwa 60 °C und insbesondere etwa 43 bis 50 °C aufweist und/oder etwa 0,1 bis 12 Gew.-%, insbesondere etwa 1 bis etwa 5 Gew.-% Impfkristalle enthält. Besonders bevorzugt ist der Einsatz einer vorgekrätzten Schmelze, die etwa 0,1 bis 12 Gew.-% Impfkristalle von L-Menthol enthält. Es können auch bei Temperaturen von 42 bis 43 °C unterkühlte Mentholschmelzen eingesetzt werden. Um zu verhindern, dass sich im Kratzkühler Anbackungen bilden, die dann ungesteuert abplatzen und die Schmelztemperatur beeinflussen, empfiehlt es sich, den Kühler beispielsweise mit einer Begleitheizung auszustatten.

Die gleichmäßige Vertropfung kann mit Hilfe eines so genannten Rotoformers erfolgen. Der Rotoformer besteht aus einem beheizten zylindrischen Innenkörper, der mit flüssigem Produkt beschickt wird, und einem mit zahlreichen Bohrungen versehenen Außenrohr, das sich konzentrisch um den Innenkörper dreht und dabei Produkttropfen auf die gesamte Länge eines Stahlbandkühlers ablegt. Ein im Innenkörper eingebautes System aus Umlenkungen und Düsen gewährleistet einen gleichmäßigen Druck über die gesamte Breite des Bauteils und somit einen gleichmäßigen Austritt des Produktes durch alle Bohrungen des Außenrohres. Dabei weisen alle Produkte, speziell die so erhältlichen Pastillen von einer Seite des Stahlbandes zur anderen eine gleichmäßige Größe auf. Die Umfangsgeschwindigkeit des Rotoformers ist vorzugsweise synchron zur Geschwindigkeit des Bandes: die Tropfen werden daher ohne Verformung abgelegt. Die während der Verfestigung und Kühlung freigesetzte Wärme wird durch das rostfreie Stahlband an das Kühlwasser, das gegen die Bandunterseite gesprüht wird, abgegeben. Das Wasser wird in Wannen gesammelt und der Rückkühlanlage zugeführt, in keinem Stadium kommt es mit dem Produkt in Berührung. Nach dem Ablegen des Tropfens auf dem Stahlband bleibt eine geringe Menge Produkt an den Außenrändern der Bohrungen des Außenrohres haften. Ein beheizbarer Einweiser drückt dieses Produkt in einen inneren Spalt im Rotoformer, von wo es mit dem Originalprodukt vermischt und erneut auf das Stahlband aufgegeben wird. Um eine Verstopfung des Rotoformers zu vermeiden, empfiehlt sich hier beispielsweise der Einsatz einer Wärmestauhaube. Entsprechende Kombinationen aus Rotoformer und Stahlbandkühler werden beispielsweise von der Firma Sandvik Process Systems GmbH, D-70736 Fellbach im Handel angeboten. Eine sehr ähnliche Technologie wird beispielsweise unter der Bezeichnung Rollomat von der Firma Kaiser Process & Belt Technology GmbH, D-47800 Krefeld angeboten. Grundsätzlich geeignet sind auch rotierende und vibrierende Lochplatten, sofern die Viskosität (entsprechend dem Feststoffanteil in der Schmelze) der Schmelztröpfchen nicht zu hoch ist.

Die Schmelztropfen vom Rotoformer werden auf ein gekühltes Band, insbesondere ein gekühltes Stahlband abgelegt welches mehrere Kühlzonen aufweisen kann, die unabhängig voneinander temperiert werden können, beispielsweise auf Temperaturen unterhalb des Schmelz- oder Erstarrungspunktes, für L-Menthol im Bereich von etwa 5 bis etwa 42 °C. Typisch sind beispielsweise Kühlbänder mit drei Kühlzonen, von denen die ersten beiden Temperaturen von etwa 25 bis 30 und die letzte von etwa 15 bis 20 °C aufweisen. Beispielsweise kommen Kühlbänder zum Einsatz, die eine Länge von etwa 2 bis etwa 20 m und eine Breite von etwa 10 bis etwa 200 cm aufweisen. Die Laufgeschwindigkeit der Kühlbänder wird dann vorteilhafterweise so eingestellt, dass unter Berücksichtigung der oben genannten Geometrie der Bänder auf diese Weise eine Kühlzeit eingehalten wird, die eine vollständige Kristallisation der Schmelzen sicherstellt. In Abhängigkeit der gewünschten Kapazität können selbstverständlich auch größere Einheiten eingesetzt werden, wobei sich die Kapazität proportional zur Breite des Kühlbandes steht und sich die Verweilzeit aus Länge und Geschwindigkeit des Kühlbandes ergibt. Grundsätzlich kann das Verfahren auch auf Anlagen durchgeführt werden, die eine Kapazität von 50 bis 1.000 kg/h oder größer aufweisen.

Anschließend werden die festen Kühlstoffe vom Band abgenommen, was beispielsweise mit Hilfe eines Messers erfolgt. Die Abnahme kann dabei entweder nach der einfachen Kühllänge oder unter Zuhilfenahme nach weiterem Verbleib auf dem Kühlband nahe der Aufgabestelle erfolgen. Das Material kann zum Reifen auch länger auf dem Band verbleiben und in einem untertemperierten oder nachtemperierten Bereich verbleiben.

Anstelle eines Kühlbandes können auch Kühlteller oder dergleichen eingesetzt werden, wie sie beispielsweise als Pastillierhilfen von der Firma Andritz Gouda, NL-2740 Waddingxveen vertrieben werden.

Die nach dem geschilderten Verfahren erhaltenen Partikel zeichnen sich dadurch aus, dass sie nur noch geringe Feinanteile enthalten, ein günstiges Oberflächen/Volumenverhältnis aufweisen und gleichzeitig gewölbte aber glatte Oberflächen besitzen, die in der Schüttung möglichst kleine Kontaktflächen ergeben, unempfindlich gegen Abrieb sind und zudem möglichst wenig oder keine Bruchkannten aufweisen.

Die jeweils vorliegende Modifikation des erhaltenen verfestigten L-Menthols und somit der Abschluss des Erstarrungsvorgangs kann mit dem Fachmann bekannten Verfahren wie Röntgenbeugung oder Pulverdiffraktometrie ermittelt werden (s. z.B. Joel Bernstein, "Polymorphism in Molecular Crystal"s, Oxford University Press 2002, S. 94-150).

Im Sinne der vorliegenden Erfindung kommen als Normverpackung zur Lagerung, einschließlich der Befüllung und dem folgenden Transport der festen Kühlstoffe vorzugsweise so genannte Normkartons in Betracht, die insbesondere keine Gefahrguteinstufung benötigen. Diese Normkartons können einwellig, zweiwellig oder dreiwellig sein; vorzugsweise sind sie einwellig. Üblicherweise verfügen sie über voneinander stoßende Böden und Deckelklappen und weisen ein Volumen von etwa 10 bis etwa 25 und insbesondere etwa 20 bis etwa 24 Litern auf. Ebenfalls üblich ist es, dass diese Kartons aus Wellpappe, vorzugsweise aus Wellpappe der Qualität 1.30 c nach WK-10 bestehen und dabei einen Kantenstauchwiderstand (ECT-Wert) von etwa 4 bis etwa 7 kN/m und insbesondere etwa 4,5 bis etwa 6,0 kN/m besitzen. Typische Berstwerte für solche Kartons liegen im Bereich von etwa 900 bis etwa 1.000 kPa.

Im Sinne der vorliegenden Erfindung sind Normkartons des Typ N7 mit den Maßen (Höhe x Länge x Breite) von etwa 400 x 300 x 200 mm besonders bevorzugt.

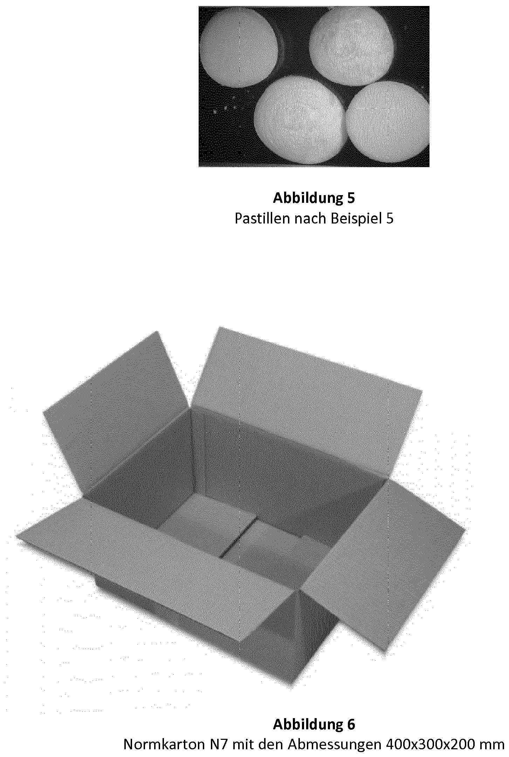

Hierbei handelt es sich um eine Transportverpackung, die nach FEFCO 0201 mit zusammenstoßenden Deckel- und Bodenklappen gefertigt ist und den Vorgaben der meisten großen europäischen Handelshäuser genügen. Die Normkartons sind aus Mischpapieren hergestellt und besonders preiswert. Ein weiterer Vorteil der N7 Kartons ist, dass sie sich ohne Platzverlust sowohl auf Europaletten als auch US-Paletten stapeln lassen. Ein Muster ist in **Abbildung 6** wiedergegeben. Entsprechende Produkte sind beispielsweise von der Firma Friedrich Bähr GmbH & Co. KG, 28279 Bremen (DE) zu beziehen.

### BEISPIELE

### HERSTELLBEISPIELE

In den folgenden Ausführungsbeispielen sollte die Herstellung von Pastillen mit einem optimalen Oberflächen-zu-Volumenverhältnis und guten Verbackungseigenschaften hergestellt und untersucht werden, die sich zur Durchführung des erfindungsgemässen Verfahrens eignen. Ebenfalls sollten Verfahrensbedingungen ermittelt werden, die die Herstellung von vollständig durchkristallisiertem Material sicherstellt. Eine Nachkristallisation im abgepackten Zustand sollte verhindert werden.

### VERSUCHSAUFBAU UND VERFAHRENSDURCHFÜHRUNG

Die Versuche wurden auf einem Stahlbandkühler mit Rotoformer und vorgeschaltetem Kratzkühler durchgeführt wie in **Abbildung A** schematisch dargestellt. Dabei bedeuten die Bezugszeichen Folgendes:

| | | | |
|---|---|---|---|
| 1 | Eduktbehälter | 6 | Eduktrückführung |
| 2 | Eduktpumpe | 7 | Rotoformer |
| 3 | Extruder | 8 | Kühlband mit drei Kühlzonen T1, T2, T3 |
| 4 | Wärmetauscher | 9 | Granulator |
| 5 | Ventil | 10 | Produktvorlage |

Eine im Kratzkühler vorgekrätzte Schmelze (d.h. eine Suspension von Impfkristallen in Menthol) wurde hierbei über einen Rotoformer auf ein vorgekühltes Stahlband aufgegeben. Die Kühlbandlänge betrug 12,5 m, die Bandbreite 600 mm. Das Kühlband hatte drei Kühlzonen, welche unabhängig voneinander temperiert werden konnten. Die Abnahme vom Kühlband erfolgte durch ein Messer, entweder nach der einfachen Kühllänge oder unter Zuhilfenahme des Bandrücklaufs nahe der Aufgabestelle. Hierdurch erfuhr das Material auf den 12,5 m des Bandrücklaufs eine zusätzliche Abkühlung. Die Laufgeschwindigkeit des Kühlbandes (und somit die Kapazität des Kühlbandes) wurde über die Versuche nur unwesentlich geändert, wodurch über die Versuche ein Durchsatz im Bereich von 150 -165 kg/h resultierte. Das erhaltene Material wurde mit einer Rüttelsiebmaschine (Fa. Allgaier; Siebweite: 1,6 mm und 1,25 mm) von anhaftenden Feinanteilen getrennt. Die Abladetemperatur des Materials wurde durch Messung in einem Dewargefäß mit Thermoelement bestimmt. Die Änderung der Temperatur nach Abnahme vom Band wird im Folgenden als Nachkristallisationswärme bezeichnet. Der Durchsatz wurde mit Stoppuhr und Waage im Mittelteil eines Versuchsdurchlaufes bestimmt. Pro Versuch wurden etwa 20 bis 30 kg Pastillen als Vorlauf genommen. Die erhaltenen Materialien wurden während des Versuchs in F1 Kartons mit PE-Innenbeutel (Symrise Standard Packmittel für Menthol kompaktiert) verpackt.

### Beispiel 1

Als Starttemperatur wurden 30°C auf T1 und T2 gewählt, da diese Temperatur des Metallbandes nahe an der Erstarrungstemperatur der α-Modifikation liegt (siehe Bild 1) und bei einer überlagerten spontanen Kristallisation nur wenig γ-Modifikation zu erwarten war. Die Erstarrungstemperatur in der Pastille sollte durch den schlechteren Wärmeübergang durch das erstarrte Menthol höher liegen und somit bevorzugt zur Bildung von α-Modifikation führen. Auf T3 wurden 15°C gewählt um den Wärmetransport durch das bereits verfestigte Menthol zu forcieren und so eine vollständige Kristallisation zu gewährleisten. Die Versuchsbedingungen sind in **Tabelle 1** wiedergegeben

**Tabelle 1**

| Versuchsbedingungen | |
|---|---|
| **Temperaturzonen des Kühlbandes** | T1: 30°C; T2: 30°C; T3: 15°C |
| **Temperatur Kratzkühler** | 41,5 °C |
| **Durchsatz** | 150 kg/h |
| **Gewichte (Kartons)** | 15,6 kg / 12,45 kg / 19,50 kg / 21,05 kg / 20,6 kg |
| **Feinanteile** | 41,8 g auf 89,2 kg (469 g / t Pastillen) |
| **Abladetemperatur** | 25,2 °C |
| **Nachkristallisationswärme** | 1°Cüber 1h Raumtemperatur: 27°C |

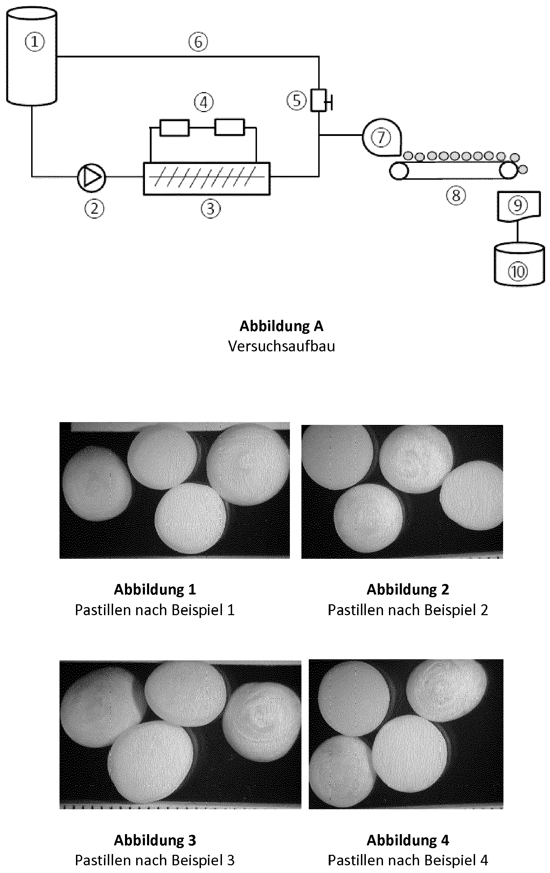

Nach kurzem Vorlauf wurden rein weiße Pastillen erhalten (**Abbildung 1****)** Die Pastillen waren vollständig durchkristallisert und nur schwer mit Spatel/Messer zu zerteilen.

### Beispiel 2

Nach Durchlaufen des Kühlbandes waren die Pastillen bei T2 noch nicht vollständig durchkristallisiert. Am Ende des Kühlbandes bei T3 waren die Pastillen am oberen Ende noch leicht weich und mit dem Messer gut zu zerteilen. Die Versuchsbedingungen sind in **Tabelle 2** wiedergegeben; die Pastillen sind in **Abbildung 2** zu sehen.

**Tabelle 2**

| Versuchsbedingungen | |
|---|---|
| **Temperaturzonen des Kühlbandes** | T1: 30°C; T2: 30°C; T3: 18 °C |
| **Temperatur Kratzkühler** | 41,4 - 41,6 °C |
| **Durchsatz** | 165 kg/h |
| **Gewichte (Kartons)** | 19,82 kg / 20,48 kg / 20,93 kg / 20,27 kg |
| **Feinanteile** | 106,4 g auf 81,5 kg (1305 g / t Pastillen) |
| **Abladetemperatur** | 24,4 °C |
| **Nachkristallisationswärme** | 1°C über 30 min Raumtemperatur: 27°C |

### Beispiel 3

Im Laufe von Versuch 3 wurde das Abnahmemesser am Ende des Kühlbandes entfernt. Der Bandrücklauf wurde als zusätzliche Nachkühlstrecke verwendet. Die Pastillen waren nach Abnahme hart und durchkristallisiert. Die Versuchsbedingungen sind in **Tabelle 3** wiedergegeben; die Pastillen sind in **Abbildung 3** zu sehen.

**Tabelle 3**

| Versuchsbedingungen | |
|---|---|
| **Temperaturzonen des Kühlbandes** | T1: 30 °C; T2: 30 °C; T3: 18 °C; Bandrücklauf Nachkühlung |
| **Temperatur Kratzkühler** | 41,4 - 41,6 °C |
| **Durchsatz** | 165 kg/h |
| **Gewichte (Kartons)** | 20,57 kg / 20,49 kg / 19,36 kg |
| **Feinanteile** | 48,6 g auf 60,42 kg (804 g / t Pastillen) |
| **Abladetemperatur** | 24,4 °C |
| **Nachkristallisationswärme** | 1°C über 30 min Raumtemperatur: 27°C |

### Beispiel 4

Die Pastillen waren vergleichbar zu Beispiel 1. Die Versuchsbedingungen sind in **Tabelle 4** wiedergegeben; die Pastillen sind in **Abbildung 4** zu sehen.

**Tabelle 4**

| Versuchsbedingungen | |
|---|---|
| **Temperaturzonen des Kühlbandes** | T1: 30°C; T2: 30°C; T3: 15°C |
| **Temperatur Kratzkühler** | 41,5 - 41,6 °C |
| **Durchsatz** | 150 kg/h |
| **Gewichte (Kartons)** | 18,85 kg / 18,75 kg / 19,45 kg / 19,65 kg |
| **Feinanteile** | 106,1 g auf 76,7 kg (1383 g / t Pastillen) |
| **Abladetemperatur** | 25,2 °C |
| **Nachkristallisationswärme** | 1,0°C über 30 min Raumtemperatur: 28°C |

### Beispiel 5

Im Laufe von Beispiel 5 wurde das Abnahmemesser am Ende des Kühlbandes entfernt. Der Bandrücklauf wurde als zusätzliche Nachkühlstrecke verwendet. Die Pastillen waren nach Abnahme hart und durchkristallisiert. Die Versuchsbedingungen sind in **Tabelle 5** wiedergegeben; die Pastillen sind in **Abbildung 5** zu sehen.

**Tabelle 5**

| Versuchsbedingungen | |
|---|---|
| **Temperaturzonen des Kühlbandes** | T1: 30 °C; T2: 30 °C; T3: 15 °C; Bandrücklauf Nachkühlung |
| **Temperatur Kratzkühler** | 41,4 - 41,6 °C |
| **Durchsatz** | 165 kg/h |
| **Gewichte (Kartons)** | 15,4 kg |
| **Abladetemperatur** | 22,2 °C |
| **Nachkristallisationswärme** | 1,0°C über 30 min Raumtemperatur: 28°C |

### Beispiel 6, Vergleichsbeispiel V1

Beispiel 1 wurde wiederholt, die Kühlung jedoch mit Hilfe eines Doppelbandkühlers mit gekühlten Stahloberflächen und einer Spaltweite von 0,3 cm (Länge 12 m, Breite 35 cm) durchgeführt. Der Doppelbandkühler wies ebenfalls 3 Kühlzonen (30°C, 30 °C, 15 °C) auf; das Produkt wurde in Form von Schuppen mit Hilfe eines Messers abgenommen.

Jeweils 5 kg der Pastillen nach dem Beispiel 1 (Durchmesser: 5 mm) sowie dem Vergleichsbeispiel V1 wurden in Kunststoffbeutel abgefüllt und diese in Kartons über einen Zeitraum von 6 Wochen bei 20 °C gelagert. Die Ergebnisse sind in **Tabelle 6** zusammengefasst.

**Tabelle 6**

| Lagertests | | |
|---|---|---|
| **Lagerzeit** | **Beispiel 1** | **Vergleichsbeispiel V1** |
| 1 Woche | Material an der Oberfläche leicht vereinzelbar. Keine Verklumpung. | Material an der Oberfläche leicht vereinzelbar. Keine Verklumpung. |
| 2 Wochen | Material an der Oberfläche leicht vereinzelbar. In der Mitte der Füllung geringe Menge zu Klumpen verbacken, die sich von Hand vereinzeln lassen. | Material an der Oberfläche vereinzelbar. In der Mitte der Füllung Klumpenbil-dung, die sich mit einer Schaufel vereinzeln lassen. |
| 3 Wochen | Material an der Oberfläche leicht vereinzelbar. In der Mitte der Füllung geringe Menge zu Klumpen verbacken, die sich von Hand vereinzeln lassen. | Material an der Oberfläche vereinzelbar. In der Mitte der Füllung deutliche Klumpenbildung, die sich mit einer Schaufel vereinzeln lassen. |
| 4 Wochen | Material an der Oberfläche leicht vereinzelbar. In der Mitte der Füllung geringe Menge zu Klumpen verbacken, die sich mit von Hand vereinzeln lassen. | Material an der Oberfläche vereinzelbar. In der Mitte der Füllung deutliche Klumpenbildung, die sich mit einer Schaufel vereinzeln lassen. |
| 5 Wochen | Material an der Oberfläche vereinzelbar. In der Mitte der Füllung Klumpen-bildung, die sich mit einer Schaufel vereinzeln lassen. | Material an der Oberfläche schwer vereinzelbar. In der Mitte der Füllung deutliche Klumpenbildung, die sich mit einer Schaufel vereinzeln lassen. An der Oberfläche geringe Nadelbildung durch Sublimation. |
| 6 Wochen | Material an der Oberfläche vereinzelbar. In der Mitte der Füllung deutliche Klumpenbildung, die sich mit einer Schaufel vereinzeln lassen. An der Oberfläche geringe Nadelbildung durch Sublimation. | 80 % verklumpt, deutliche Nadelbildung durch Sublimation. |

### Beispiel 7

Um zu belegen, dass die Kristallmodifikation alleine nicht ausschlaggebend für die Verbackungsneigung ist, wurden 20 kg über 8 Monate abgelagertes L-Menthol, das vollständig in seiner α-Modifikation vorlag, über eine Siebmühle mit 3 mm Sieblocheinsatz zu Kristallpulver zerkleinert. Dabei wurde keine Temperaturerhöhung durch den Zerkleinerungsvorgang gemessen. Anschließend wurde das Kristallpulver wieder gelagert. Nach bereits zwei Wochen war das Pulver zu einem Block verklumpt, der nur durch starkes Kneten lokal aufgelockert werden konnte.

Die Beispiele zeigen, dass die nach dem beschriebenen Verfahren erhaltenen festen Kühlstoffe gegenüber den Produkten des Stands der Technik über deutlich verbesserte Lagereigenschaften verfügen. Insbesondere die Tendenz zur Verbackung der Kompaktate sowie deren Sublimationsneigung sind signifikant vermindert. Damit ist es nunmehr möglich, abweichend von den bisherigen Erfordernissen Verpackungskartons einzusetzen, die über keine Gefahrguteinstufung verfügen und daher wesentlich kostengünstiger sind.

## Patentansprüche

1. Verfahren zur verbackungsfreien Lagerung von festen Mentholverbindungen in Form von Schuppen oder Pastillen, **dadurch gekennzeichnet, dass** man diese bei Umgebungstemperatur in Normverpackungen mit einem Fassungsvermögen von maximal 25 l mit den Maßgaben abfüllt, dass
(a) die Verpackungen bis maximal zu 50 Vol.-% gefüllt sind und
(b) die Füllmenge ein Gewicht von 10 kg nicht übersteigt.

2. Verfahren nach Anspruch 1, **dadurch gekennzeichnet, dass** man Kühlstoffe einsetzt, die ausgewählt sind aus der Gruppe, die gebildet wird von Menthol einschließlich seiner Racemate, Menthol Methyl Ether, Menthone Glyceryl Acetal (FEMA GRAS 3807), Menthone Glyceryl Ketal (FEMA GRAS 3808), Menthyl Lactate (FEMA GRAS 3748), Menthol Ethylene Glycol Carbonate (FEMA GRAS 3805), Menthol Propylene Glycol Carbonate (FEMA GRAS 3806), Menthyl-N-ethyloxamat, Monomethyl Succinate (FEMA GRAS 3810), Monomenthyl Glutamate (FEMA GRAS 4006), Menthoxy-1,2-propanediol (FEMA GRAS 3784), Menthoxy-2-methyl-1,2-propandiol (FEMA GRAS 3849) sowie den Menthancarbonsäureestern und -amiden WS-3, WS-4, WS-5, WS-12, WS-14 und WS-30 sowie deren Gemischen. Z

3. Verfahren nach den Ansprüchen 1 und/oder 2, **dadurch gekennzeichnet, dass** man als Kühlstoffe L-Menthol oder ein Menthol-Racemat einsetzt.

4. Verfahren nach mindestens einem der Ansprüche 1 bis 3, **dadurch gekennzeichnet, dass** man Kühlstoffe einsetzt, die einen α-Mentholgehalt von etwa 85 bis etwa 99 Gew.-% besitzen.

5. Verfahren nach mindestens einem der Ansprüche 1 bis 4, **dadurch gekennzeichnet, dass** man Kühlstoffe einsetzt, die
(i) einen Feinanteil von weniger als 5 Gew.-% aufweisen, und/oder
(ii) einen alpha-Mentholgehalt von mindestens 80 Gew.-%; und/oder
(iii) ein Oberflächen-zu-Volumenverhältnis von kleiner als 2 mm⁻¹ aufweisen.

6. Verfahren nach mindestens einem der Ansprüche 1 bis 5, **dadurch gekennzeichnet, dass** man Kühlstoffe einsetzt, die einen Feinanteil von weniger als 2 Gew.-% aufweisen.

7. Verfahren nach mindestens einem der Ansprüche 1 bis 6, **dadurch gekennzeichnet, dass** man Kühlstoffe einsetzt, die ein Oberflächen-zu-Volumenverhältnis von kleiner 1,5 mm⁻¹ aufweisen.

8. Verfahren nach mindestens einem der Ansprüche 1 bis 7, **dadurch gekennzeichnet, dass** man Kühlstoffe einsetzt, die gewölbte Oberflächen aufweisen, so dass das Verhältnis von planer Oberfläche zur Gesamtoberfläche des Partikels maximal 60 % beträgt.

9. Verfahren nach mindestens einem der Ansprüche 1 bis 8, **dadurch gekennzeichnet, dass** man Normkartons einsetzt, die voneinander stoßende Böden und Deckelklappen aufweisen.

10. Verfahren nach mindestens einem der Ansprüche 8 und/oder 9, **dadurch gekennzeichnet**, man Normkartons einsetzt, die aus Wellpappe der Qualität 1.30 c nach WK-10 bestehen.

11. Verfahren nach mindestens einem der Ansprüche 8 bis 10, **dadurch gekennzeichnet**, man Normkartons einsetzt, die einen Kantenstauchwiderstand (ECT-Wert) von etwa 4 bis etwa 7 kN/m und/oder einen Berstwert von etwa 900 bis etwa 1.000 kPa aufweisen.

12. Verfahren nach mindestens einem der Ansprüche 1 bis 11, **dadurch gekennzeichnet, dass** Normkartons des Typ N7 mit den Maßen (Höhe x Länge x Breite) von etwa 400 x 300 x 200 mm einsetzt.

## Claims

1. A process for the caking-free storage of solid menthol compounds in the form of flakes or pastilles, **characterised in that** these are filled at ambient temperature into standard packs with a maximum capacity of 25 l with the provisos that
(a) the packages are filled to a maximum of 50% by volume, and
(b) the filling quantity does not exceed a weight of 10 kg.

2. The process according to claim 1, **characterized in that** cooling agents selected from the group formed by menthol including its racemates, menthol methyl ether, menthone glyceryl acetal (FEMA GRAS 3807), menthone glyceryl ketal (FEMA GRAS 3808), menthyl lactate (FEMA GRAS 3748), menthol ethylene glycol carbonate (FEMA GRAS 3805) are used, Men-thol Propylene Glycol Carbonate (FEMA GRAS 3806), Menthyl N-ethyloxamate, Monomethyl Succinate (FEMA GRAS 3810), Monomenthyl Glutamate (FEMA GRAS 4006), Menthoxy-1, 2-propanediol (FEMA GRAS 3784), menthoxy-2-methyl-1,2-propanediol (FEMA GRAS 3849) and the menthanecarboxylic acid esters and amides WS-3, WS-4, WS-5, WS-12, WS-14 and WS-30 and mixtures thereof.

3. The process according to Claims 1 and/or 2, **characterized in that** L-menthol or a menthol racemate is used as cooling agent.

4. The process according to at least one of claims 1 to 3, **characterized in that** cooling agents are used which have an α-menthol content of about 85 to about 99% by weight.

5. The process according to at least one of claims 1 to 4, **characterized in that** cooling agents are used which have
(i) have a fines content of less than 5% by weight, and/or
(ii) an alpha-menthol content of at least 80% by weight; and/or
(iii) have a surface-to-volume ratio of less than 2 mm⁻¹.

6. The process according to at least one of claims 1 to 5, **characterized in that** cooling agents are used which have a fines content of less than 2 wt.%.

7. The process according to at least one of claims 1 to 6, **characterized in that** cooling materials are used which have a surface-to-volume ratio of less than 1.5 mm⁻¹.

8. The process according to at least one of claims 1 to 7, **characterized in that** cooling materials are used which have curved surfaces such that the ratio of flat surface to total surface of the particle is at most 60%.

9. The process according to at least one of claims 1 to 8, **characterized in that** standard cartons are used which have butt-jointed bottoms and flaps.

10. The process according to at least one of claims 8 and/or 9, **characterised in that** standard cartons are used which consist of corrugated board of quality 1.30 c according to WK-10.

11. The process according to at least one of claims 8 to 10, **characterized in that** standard boards are used which have an edge crush resistance (ECT value) of about 4 to about 7 kN/m and/or a burst value of about 900 to about 1,000 kPa.

12. The process according to at least one of claims 1 to 11, **characterized in that** standard cartons of type N7 with dimensions (height x length x width) of about 400 x 300 x 200 mm are used.

## Revendications

1. Procédé pour le stockage sans prise en masse de composés mentholés solides sous forme de paillettes ou de pastilles, **caractérisé en ce que** l'on remplit ceux-ci à température ambiante dans des emballages normalisés d'une capacité maximale de 25 litres, avec les conditions que
(a) les emballages soient remplis au maximum à 50 % en volume et que
(b) la quantité de remplissage ne dépasse pas un poids de 10 kg.

2. Procédé selon la revendication 1, **caractérisé en ce que** l'on utilise des agents réfrigérants qui sont choisis dans le groupe formé par le menthol, y compris ses racémates, le menthol méthyl éther, le menthone glyceryl acétal (FEMA GRAS 3807), le menthone glyceryl cétal (FEMA GRAS 3808), le menthyl lactate (FEMA GRAS 3748), le menthol ethylene glycol carbonate (FEMA GRAS 3805), Men-thol Propylene Glycol Carbonate (FEMA GRAS 3806), menthyl-N-ethyloxamate, monométhyl succinate (FEMA GRAS 3810), monomenthyl glutamate (FEMA GRAS 4006), menthoxy-1, 2-propanediol (FEMA GRAS 3784), le menthoxy-2-méthyl-1,2-propanediol (FEMA GRAS 3849) ainsi que les esters et amides d'acide menthanecarboxylique WS-3, WS-4, WS-5, WS-12, WS-14 et WS-30 et leurs mélanges.

3. Procédé selon les revendications 1 et/ou 2, **caractérisé en ce que** l'on utilise comme agents réfrigérants du L-menthol ou un racémate de menthol.

4. Procédé selon au moins l'une des revendications 1 à 3, **caractérisé en ce que** l'on utilise des agents réfrigérants qui possèdent une teneur en α-menthol d'environ 85 à environ 99 % en poids.

5. Procédé selon au moins l'une des revendications 1 à 4, **caractérisé en ce que** l'on utilise des réfrigérants qui sont
(i) présentent une teneur en fines inférieure à 5 % en poids, et/ou
(ii) une teneur en alpha-menthol d'au moins 80 % en poids ; et/ou
(iii) présentent un rapport surface/volume inférieur à 2 mm⁻¹.

6. Procédé selon au moins l'une des revendications 1 à 5, **caractérisé en ce que** l'on utilise des réfrigérants qui présentent une teneur en fines inférieure à 2 % en poids.

7. Procédé selon au moins l'une des revendications 1 à 6, **caractérisé en ce qu'**on utilise des agents de refroidissement qui présentent un rapport surface/volume inférieur à 1,5 mm⁻¹ .

8. Procédé selon au moins l'une des revendications 1 à 7, **caractérisé en ce qu'**on utilise des réfrigérants qui présentent des surfaces bombées, de sorte que le rapport entre la surface plane et la surface totale de la particule est au maximum de 60 %.

9. Procédé selon au moins l'une des revendications 1 à 8, **caractérisé en ce qu'**on utilise des cartons normalisés qui présentent des fonds et des rabats de couvercle se touchant.

10. Procédé selon au moins l'une des revendications 8 et/ou 9, **caractérisé en ce qu'**on utilise des cartons normalisés qui sont constitués de carton ondulé de qualité 1.30 c selon WK-10.

11. Procédé selon au moins l'une des revendications 8 à 10, **caractérisé en ce qu'**on utilise des cartons normalisés qui présentent une résistance à l'écrasement des bords (valeur ECT) d'environ 4 à environ 7 kN/m et/ou une valeur d'éclatement d'environ 900 à environ 1000 kPa.

12. Procédé selon au moins l'une des revendications 1 à 11, **caractérisé en ce qu'**on utilise des cartons normalisés de type N7 ayant des dimensions (hauteur × longueur × largeur) d'environ 400 x 300 x 200 mm.
